# EUROPEAN PATENT SPECIFICATION

(11) **EP 3 054 313 B1**
(45) Date of publication and mention of the grant of the patent: **31.01.2018**
(21) Application number: 15154139.8
(22) Date of filing: 06.02.2015
(51) Int. Cl.: G01S 7/481, G01S 17/93, G02B 3/00

(54) **Transmitter lens for a lidar based sensor**
Sender Linse für Sensor auf LIDAR-Basis
Lentille d'émetteur pour un détecteur à base de lidar

(43) Date of publication of application: 10.08.2016
(73) Proprietor: Conti Temic Microelectronic GmbH, 90411 Nürnberg (DE)
(72) Inventor: Terefe, Nehemia, 88131 Lindau (DE)

(56) References cited:
- US-A1- 2010 271 684
- US-A1- 2012 037 794
- US-A1- 2013 208 175
- US-B1- 6 424 786

## Description

The present specification relates to LIDAR based sensors, and in particular to LIDAR based automatic emergency braking (AEB) sensors. The lidar sensor can be used to measure distance and/or velocity of objections in a scene. More specifically, the application relates to a transmitter lens for use in a lidar sensor system or in a lidar camera.

A lidar (light detection and ranging) system, in particular a short range lidar system has various applications in the automotive sector. For example, it can be used for a simple anti-collision protection for steered and autonomous vehicles, it can provide a positioning and a headway control. In particular, the lidar can be used for construction machinery vehicles, fork lifts, tractors, harvester combines and other industrial vehicles in production processes, warehousing, agriculture and other fields of industry. Furthermore, it can also be used in autonomous guided vehicles (AGV) such as special transporter, module transporter etc.

Further application include an area monitoring system, e.g. of hazardous or non-accessible areas, object detection, e.g. in confusing or unclear areas, general distance and speed monitoring, rail traffic technology, such as an approximation aid for a bumper, the handling hot preliminary products in steel works, such as billets and slabs, wood-working and automated cut of semi-finished products.

A time-of-flight camera is one particular example of a lidar sensor system or lidar camera for detection of a distance of an object, or of parts of the objects in a lidar system. The time-of-flight camera is a class of scanner-less lidar, in which the entire scene is captured with each laser or light pulse, as opposed to point-by-point with a laser beam such as in scanning LIDAR systems. Compared to 3D laser scanning methods for capturing 3D images, TOF cameras can operate very quickly, providing up to 160 images per second.

Several different technologies for time-of-flight cameras have been developed, such as RF-modulated light sources with phase detectors, Range Gated Imagers and Direct Time-of-Flight imagers.

A time-of-flight camera typically comprises an illumination or transmitter unit for illuminating the scene, a receiver unit with an image sensor and with a receiver lens for gathering the reflected light and projecting an image of the environment onto the image sensor in a focal plane array, a driver electronics for controlling and synchronizing high speed light signals, and a computation unit for calculating the object distances. The illumination unit comprises a transmitter lens for illuminating the scene in front of the TOF camera.

An illumination assembly including an array of microprisms and a microlens on each microprism is known-from US 6, 424, 786 B1. Each prism has a pair of oppositely positioned first and second sidewalls. The sidewalls are positioned for reflection of transmitted light from a light input end toward a light output end. The microprism form a space between each microprism of the array. In accordance with the present invention, a transmitter lens as set forth in independent claim 1 is provided. Embodiments of the invention are claimed in the dependent claims. The current application discloses a transmitter lens for a lidar sensor system or lidar camera. The transmitter lens comprises a back portion, which has a convex shape in a first direction and in a second direction. The convex shape is formed by a back surface of the back portion, which faces towards a light source when the lens is integrated into a transmitter unit of a lidar sensor system or lidar camera.

The first direction is perpendicular to the second direction, and the first direction and the second direction are both perpendicular to an optical axis of the back portion, which forms a convex lens for collimating light rays of a laser light source. More specifically, the back portion forms a convex-plane lens.

In particular, the first direction can be a vertical direction and the second direction a horizontal direction with respect to an orientation of the transmitter lens when the transmitter lens is mounted in a lidar device. The horizontal direction is also referred to as x-direction or horizontal x-direction and the vertical direction is also referred to as y-direction or vertical y-direction. According to other embodiments, the first direction is the horizontal direction and the second direction is the vertical direction.

Furthermore, the transmitter lens comprises a front portion which is arranged opposite to the back portion in a direction of an optical axis of the back portion. The front portion comprises an array of one or more prismatic elements for directing light rays, which are emitted from the back portion.

The subject matter of the present specification is not limited to a specific number of prismatic elements. In general, there can be just one prismatic elements or more. In a given embodiment, there could be as much as hundred prismatic elements. Among others, the number of required prismatic elements depends on the shape of the field of view and on the position of the centre of the field of view. Generally, fewer prismatic elements are easier and cheaper to manufacture.

Many different arrangements are possible. According to one example, the transmitter lens comprises a convex plane back surface, any number of horizontally aligned prismatic elements and an array of convex or concave microlenses. According to a further example, the transmitter lens comprises a convex-plane back surface, any number of vertically aligned prismatic elements and an array of alternating convex and concave microlenses.

In particular, the prismatic elements can be aligned in parallel to the first direction or to the second direction in the sense that a lateral boundary of the prismatic elements, which separates the prismatic elements from each other, is aligned in parallel to the first or to the second direction. Specifically, the lateral boundary may be defined as a boundary that separates surfaces of different orientations.

The prismatic elements may comprise one or more respective front surfaces, which face away from the back portion in direction of the optical axis and towards an illuminated scene. The prismatic elements may extend over only a portion of the horizontal and/or the vertical direction or they may extend over the whole of the horizontal and/or the vertical direction.

The prismatic elements provide more degrees of freedom for beam shaping and thereby a better intensity distribution of a field of view. In particular, the width of the prismatic elements helps to realize a required power budgeting: the larger the width of a prismatic element the more light can be directed into a pre-determined direction and into a pre-determined portion of the field of view. Furthermore, the illumination of a pre-determined solid angle increases with the number of prims which direct light into that region of space.

In a further embodiment, at least one of the front surfaces of the prismatic elements is inclined with respect to an optical axis of the back portion. More specifically, a surface normal vector that is perpendicular to the front surface is inclined with respect to the optical axis. In a specific embodiment, in which the optical axis is located outside the front surface, the front surface is inclined towards the optical axis. In one specific embodiment, the inclination is at least one degree. According to another embodiment, the inclination is at least 5 degrees. Angular units are chosen such that 90 degrees correspond to a right angle.

In a further embodiment, a second front surface of the prismatic elements is inclined differently from the first front surface, which is inclined with respect to the optical axis. The second front surface can be provided on the same prismatic element or on a second prismatic element. Thereby, light can be channelled into different directions, which correspond to different portions of the illuminated scene. In one specific embodiment, the difference in inclination is at least one degree. According to another embodiment, the difference is at least 5 degrees.

In general, the number of prismatic elements can be just one or many and the surface normal of each of the prismatic elements can be inclined in the horizontal x-direction, in the vertical y-direction, in both directions, or they can be straight or, in other words, parallel to the x-y plane, depending on the required field of view.

In one particular embodiment, the inclined front surface is inclined with respect to the first direction and parallel with respect to the second direction. According to a further embodiment, at least two of the prismatic elements comprise a front surface that is inclined towards an optical axis of the back portion.

An array of microlenses is provided at the front surfaces of the prismatic elements for shaping bundles of emitted light rays, and in particular for widening bundles of emitted light rays, which are emitted from the respective microlenses.

Thereby, a field of view is shaped and widened. Furthermore, the homogeneity of illumination can be increased by using smaller microlenses or a larger number of microlenses on the front surfaces of the prism. The microlenses of the array of microlenses can be provided as separate lenses, which are attached to the front surfaces of the prismatic elements, or they can be formed out of the front surface. In particular, the front surface of the prismatic elements can be formed as a periodic structure, which provides an array of microlenses.

In an automotive application, a horizontal direction refers to the horizontal with respect to a street surface when the transmitter lens is integrated into a lidar sensor system or lidar camera of a car, and a vertical direction refers to the vertical with respect to the street surface when the transmitter lens is integrated into a lidar sensor system or lidar camera of a car. In general, horizontal and vertical directions can be defined with respect to gravity or water level.

According to a further embodiment, a focal length of the microlenses in the first direction is different from or equal to a focal length in the second direction.

According to a further embodiment, the front surfaces of the prismatic elements could be inclined in any direction with respect to an optical axis of the back portion.

According to a further embodiment, the array of microlenses comprises convex microlenses, saddle shape microlenses and/or concave microlenses.

According to a further embodiment, the array of microlenses is selected from an array of rectangular microlenses, an array of polygonal microlenses and an array of circular microlenses.

According to a further embodiment, front surfaces of the prismatic elements are overlaid with an array of only concave microlenses, an array of only convex microlenses, or an array of alternate convex, saddle and concave microlenses both with respect to the first direction to and second direction.

According to a further embodiment, one or more prismatic elements comprise the front part of the transmitter lens with a front surface that is parallel or inclined towards or away the optical axis with respect to either the first direction or the second direction; or both.

According to a further embodiment, the prismatic elements occupy either horizontal or vertical partitions of the front part of transmitter lens.

According to one embodiment, a focal length of the microlenses in the horizontal direction is different from a focal length in the vertical direction. Especially, the focal length in the horizontal direction can be made smaller. In general, the focal length in both the vertical and the horizontal direction can be adjusted according to the given requirements. For example, according to another embodiment the focal length in the vertical direction can be smaller than the focal length in the horizontal direction.

For a convex lens, a smaller focal length, which corresponds to a stronger curvature of the lens surface, leads to a stronger widening up of the exiting light bundle behind a focus point of the microlens. Similarly, a smaller focal length of a virtual focus of a concave microlens leads to a stronger widening up of the emitted light bundle.

According to a further embodiment, the microlenses comprise a rectangular cross section in an x-y plane that comprises the horizontal x-direction and the vertical y-direction. Thereby, the microlenses can be placed side by side on the prismatic elements such that they cover the front surfaces of the prismatic elements. In particular, the array of microlenses can be a rectangular array of microlenses, which are placed next to each other on front surfaces of the prismatic elements.

According to a further embodiment, the array of microlenses comprises both convex microlenses and concave microlenses. In particular, the array can be designed as an array of alternating convex and concave microlenses, which alternate in the vertical direction and in the horizontal direction along the front surfaces of the prismatic elements. More specifically, the curvature of adjacent microlenses can be made such that the curvature varies smoothly in the vertical direction and/or in the horizontal direction.

The same field of view can also be designed by placing concave microlenses next to one another instead of using an array of alternate concave and convex microlenses. Similarly, convex microlenses can be put next to each other all over the prism surface and yield the same field of view. The alternate structure is good because of the smooth transition from one microlens to another making it good for manufacturing and yielding good optical quality of the field of view.

According to one embodiment, the prismatic elements form a convex front surface with respect to the vertical direction. Thereby, the emitted light rays are directed upwards in a lower portion of a prismatic element and downwards in an upper portion of a prismatic element, which results in a widening of the overall field of view. The effect of this feature is a lens that is convex with respect to the vertical direction.

According to other embodiments, one, two or more prismatic elements comprise a front surface which is tilted upwards with respect to the vertical direction and one, two or more prismatic elements comprise a front surface which is tilted downwards with respect to the vertical direction.

Similarly, according to a further embodiment, two or more prismatic elements are tilted towards an optical axis of the back surface. In one particular embodiment, these prismatic elements are the outermost prismatic elements with respect to a distance to the optical axis.

According to a further embodiment, one, two or more of the prismatic elements comprise a bottom section with a front surface that is inclined towards the optical axis of the back portion with respect to the vertical direction, and a top section with a front surface that is inclined towards the optical axis of the back portion with respect to the vertical direction. In particular embodiments, the majority or even all of the prismatic elements are shaped in this way.

According to a further embodiment, one, two or more of the prismatic elements comprise a bottom section with a front surface that is inclined away from the optical axis of the back portion with respect to the vertical direction, and a top section with a front surface that is inclined away from or towards the optical axis of the back portion with respect to the vertical direction. In particular embodiments, the majority or even all of the prismatic elements are shaped in this way.

In a further embodiment, the prismatic elements comprise a middle section between the top section and the bottom section. A front surface of the middle section is oriented perpendicular to the optical axis of the back portion.

In a further embodiment, at least two of the prismatic elements comprise a front surface that is inclined towards the optical axis of the back portion with respect to the horizontal direction. In a particular embodiment, the prismatic elements, which have a front surface that is tilted in this way, are outer prismatic elements with respect to a distance from the optical axis. A horizontal dimension of the microlenses may be adapted to a width of the prismatic elements, which is chosen based on a required power distribution.

According to a further embodiment, the front surfaces of the prismatic elements form one continuous front surface without steps or ridges. This embodiment can be easier to manufacture.

In particular, according to further embodiments the transmitter lens comprises at least three prismatic elements. According to further embodiments, the transmitter lens comprises at least 10, or between 10 and 20 prismatic elements, or at least ten vertical rows of microlenses, or between 10 and 20 vertical rows of microlenses.

In one particular embodiment, the transmitter lens comprises between 100 and 200 microlenses, or rectangular array having between 100 and 200 microlenses. In general, a number of prismatic elements and a number of microlenses can vary according to the specific requirements.

According to a further embodiment at least two outer prismatic elements are inclined towards the optical axis of the back portion with respect to the horizontal axis and parallel to the vertical direction, and at least two inner prismatic elements are inclined towards the optical axis with respect to vertical axis and parallel with respect to the horizontal direction.

Furthermore, the current specification discloses a transmitter unit of a lidar sensor system or lidar camera with a laser light source and the aforementioned transmitter lens. The laser light source is provided in a focal plane of the back portion of the transmitter lens.

Furthermore, the current specification discloses a lidar sensor system or lidar camera with the aforementioned transmitter unit and with a receiver unit having a receiver lens and a light detector. The receiver lens is arranged such that reflected light from an object that is irradiated from the transmitter lens is captured by the receiver lens.

Furthermore, the current specification discloses a car with the aforementioned lidar sensor system or lidar camera. The lidar sensor system or lidar camera is mounted to the car such that the transmitter lens is facing towards the surroundings of the car. In particular, the lidar sensor system or lidar camera can be mounted to a front portion of the car, for example to a radiator grill or, the lidar sensor system or lidar camera can be mounted to a corresponding portion of the car above the front bumper or inside windscreen or it can be integrated into the headlights.

In a design according to the present specification a micro lens arrays is placed on top of prisms and light is collimated by the front surface of the lens. Thereby, any required field of view can be realized.

Furthermore, a special type of micro lens is used which has two focal lengths, one for horizontal and one for vertical direction. Thereby, any size of horizontal and vertical fields of view can be realized.

A design according to the present specification can provide various advantages. For example, in a design according to the present specification, which comprises microlenses, the field of view (FOV) has a very good quality with respect to homogeneity and edges. A channel partitioning is reduced or eliminated.

Furthermore, an arrangement according to the current specification also works with a limited number of prisms. For example, according to one embodiment a transmitter lens with only 3 prims achieves a satisfactory imaging quality.

The use of micro array lenses contributes to a generic design of the transmitter lens very generic which is adaptable to future requirements regarding field of views.

A design according to the current specification can use a horizontal partitioning of the transmitter lens. Alternatively, the horizontal partitioning can also be referred as horizontal prismatic structures.

A design according to the current specification avoids manufacturing artefacts and provides a good signal to noise ratio. For example, the number of prism edges is reduced such that the lens introduces less noise.

A transmitter lens according to the current specification can be efficiently manufactured. Furthermore, the lens can be efficiently designed according to a given requirement. For example, an accuracy of power distribution is increased in a design according to the specification. The width of the prism can be changed to achieve a given power distribution while a required field of view is preserved.

A lens design according to the present specification provides additional degrees of freedom to achieve a horizontal or a vertical field of view and a required power distribution at the same time. Among others, the additional degrees of freedom are provided by a microlens array on top of the prisms.

Moreover, the lens has a good accuracy of power distribution between different channels. The channels correspond to separate illuminated areas of the scene to which the light power is directed. The power distribution is achieved, among others, by adjusting the size and direction of prismatic elements and by adjusting the shape and size of microlenses, which are provided on a front surface in front of the prismatic elements.

The subject matter of the current specification is now explained in further detail with respect to the following Figures in which
- Fig. 1: shows a convex planar lens,
- Fig. 2: shows a vertical cross section of a convex planar lens with micro-lenses,
- Fig. 3: shows a horizontal cross section of the lens of Fig. 2,
- Fig. 4: shows a three dimensional view of a lidar transmitter lens according to a first embodiment,
- Fig. 5: shows a schematic view of the prismatic elements in Fig. 4,
- Fig. 6: shows a side view of the lidar lens of Fig. 4,
- Fig. 7: shows a top view of the lidar lens of Fig. 4,
- Fig. 8: shows a three dimensional view of a second embodiment of a lidar lens with prismatic elements having three horizontal sections or horizontal prismatic structures,
- Fig. 9: shows a top view of the lens of Fig. 8,
- Fig. 10: shows a side view of the lens of Fig. 8,
- Fig. 11: shows a side view of a front portion of the lenses according to the first and second embodiments,
- Fig. 12: shows a top view of the front portion of Fig. 11,
- Fig. 13: shows a portion of a micro lens array of convex micro lenses in a lidar lens according to the first embodiment in a side view,
- Fig. 14: shows a top view of a first embodiment of a micro lens of the micro lens array of Fig. 13,
- Fig. 15: shows a portion of a micro lens array of concave micro lenses in a lidar lens according to the present specification in a side view,
- Fig. 16: shows a top view of a of a micro lens of the micro lens array of Fig. 15,
- Fig. 17: shows a portion of a micro lens array of alternate concave micro lenses in a lidar lens according to the present specification in a side view,
- Fig. 18: shows a top view of the concave micro lens of Fig. 17,
- Fig. 19: shows an example of a field of view which can be realized with a transmitter lens according to the present specification,
- Fig. 20: shows a partitioning of the field of view of Fig. 19 into rectangular areas,
- Fig. 21: shows optical paths in an array of concave microlenses,
- Fig. 22: shows optical paths in an array of convex microlenses,
- Fig. 23: shows optical paths in alternate array of convex and concave microlenses,
- Fig. 24: shows an overall surface pattern of an alternating array of convex and concave microlenses,
- Fig. 25: shows a further embodiment of a transmitter lens having three prismatic elements,
- Fig. 26: shows a more detailed view of the lens of Fig. 25, and
- Fig. 27: shows a further embodiment of a transmitter lens having five prismatic elements.

In the following description, details are provided to describe the embodiments of the present specification. It shall be apparent to one skilled in the art, however, that the embodiments may be practised without such details.

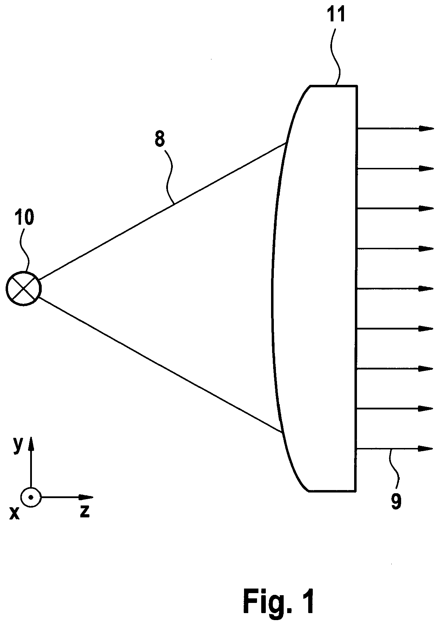

Fig. 1 illustrates the functioning of a convex-plane lens 11. The embodiments according to the present specification are based on a convex-plane lens design. A divergent light from a laser light source 10 in a focal plane of the lens 11 is collimated in the plane of Fig. 1 in a first direction parallel to an optical axis of the plane-convex lens 11 and in a second direction perpendicular to the first direction. Thereby, the divergent light rays 8 of the light source 10 are transformed into parallel light rays 9. In particular, the light source 10 can be provided by a light emitting laser diode.

In Fig. 1, the first and second directions are labelled as y-axis and x-axis, respectively. The y-axis is also referred to as vertical direction and the x-axis is also referred as horizontal direction.

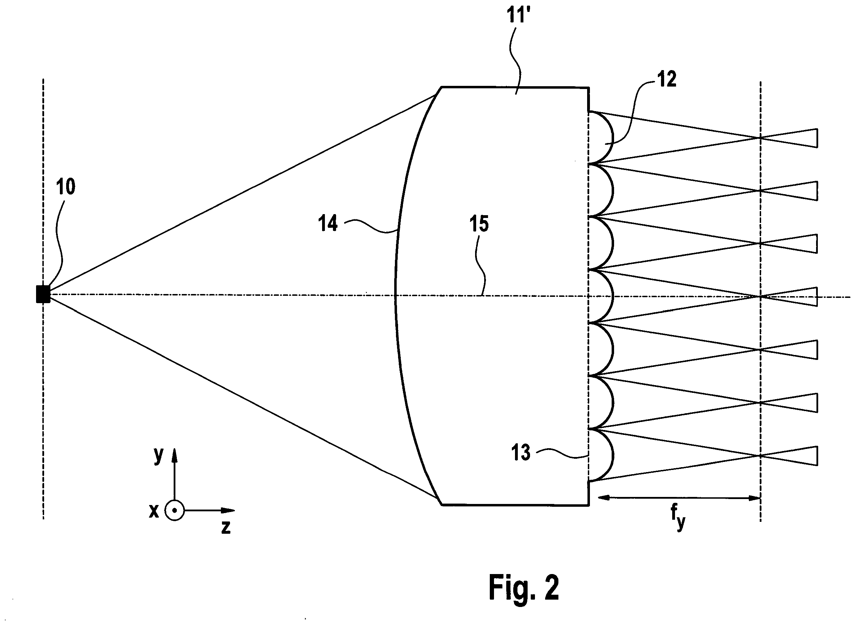

Fig. 2 shows a vertical cross section of a second convex-plane lens 11' with microlenses 12. The microlenses 12 are provided on a plane surface 13 of the plane-convex lens 11', which is opposite to a convex surface 14 in a direction of an optical axis 15 of the lens 11'. In the view of 2, seven microlenses 12 are visible.

In the lens 11' of Fig. 2, the optical axes of the microlenses 12 are arranged parallel to the optical axis 15 and the microlenses 12 have the same focal length such that collinear light rays, which leave the plane surface 13 of the the lens 11', are focused in a second focal plane at a distance f_v from the plane surface 13.

The lens 11' of Fig. 2 is a simplified example, which is provided by way of illustration. Other arrangements, such as arrangements with alternating concave and convex microlenses 12 are also covered by the embodiments of the present specification.

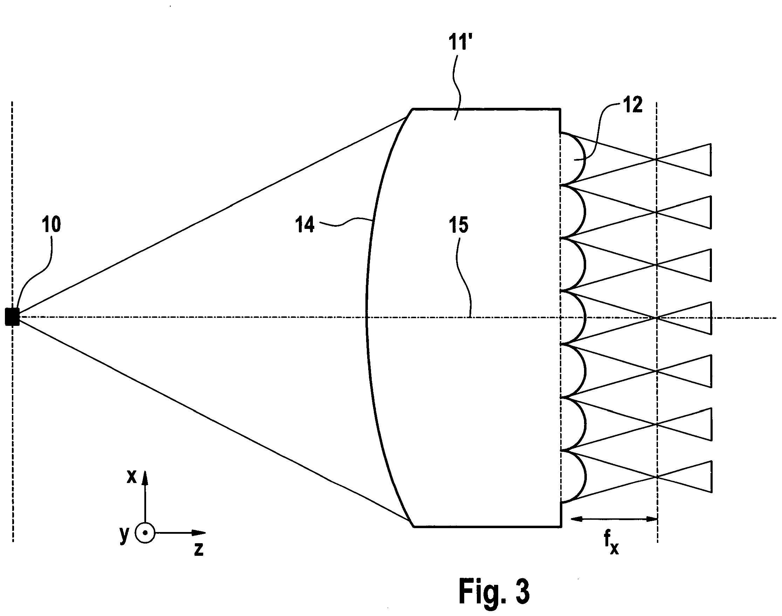

According to the present specification, the microlenses can be designed such that a focal length f_y of the microlenses in the y-z plane, which is shown in Fig. 2, is different from the focal length f_x in the x-z plane, which is shown in Fig. 3. The lens of Fig. 2 comprises an array of convex microlenses. In other embodiments, an alternating array of convex microlenses and concave microlenses is used instead.

The convex microlenses provide a widening of the field of view behind the focal planes as compared to a parallel light bundle and at the same time a good homogeneity of illumination. In particular, when the microlenses are arranged in a rectangular array the resulting field of view is also rectangular. The shape of the rectangular field of view or field of illumination can be determined by adjusting the focal lengths fx, fy in the x and y directions. By providing a smaller focal length, the widening of the light beam behind the focal plane is larger.

For example, it may be desirable to have a wider field of view parallel to the street level to cover the breadth of the street or of a street lane, while in the vertical a smaller field of view is sufficient. This can be achieved by having a smaller focal length in the horizontal x direction than in the vertical y direction. This situation is shown in the embodiment of Figs. 2 and 3 in which the focal length f_x of Fig. 2 is smaller than the focal length f_y of Fig. 3.

The widening of the field of view also reduces the intensity of a laser light from the laser source. Depending on the intensity of the laser the field of view can be adjusted such that it does not present a hazard for the eyes of pedestrians in front of the car.

Furthermore, the microlenses can be provided in a rectangular shape in the x-y plane such that they can be arranged as an array with little or no spaces between the lenses. The resulting fields of view of the individual rectangular microlenses also form approximately rectangular areas, which cover the illuminated area in the scene.

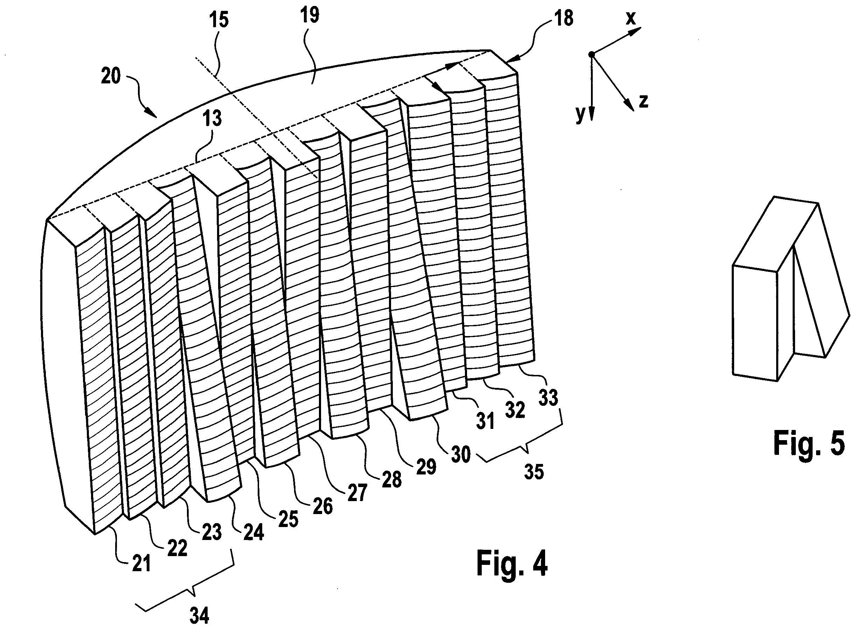

Furthermore, the micro-lenses 12 can be provided on prismatic elements, which are provided on the back of the plane surface 13. This can be best seen in the perspective view of the following Fig. 4.

Fig. 4 shows a further transmitter lens 20. The transmitter lens 20 comprises a back portion 19 and a front portion 18.

The back portion 19 of the lens 20 and of the lenses according to the other embodiments is shaped as a convex-plane lens, which is curved in both the vertical y-direction and the horizontal x-direction.

In a particular embodiment, the back surface of the back portion 19, which faces towards a light source 10, is shaped rotationally symmetric with respect to an optical axis of the lens 20, such that a focal area of the lens 20 forms a focal point that is concentrated in a focal plane. More specifically, the back surface can be shaped as a rectangular portion or cutout of a spherically symmetric surface.

The front portion 18 of the transmitter lens 20 comprises thirteen prismatic elements 21 - 33 which form tilted surfaces on a front side of the lens 20. The prismatic elements 21' - 33' are arranged symmetrically to the optical axis 15.

Outer groups 34, 35 of prismatic elements 21', 22', 23' and 31, 32, 33 are inclined in the x-z plane towards the optical axis 15 and parallel to the vertical y-axis. A second group of prismatic elements 24, 30 further inwards with respect to the optical axis is inclined towards the optical axis and with respect to the vertical y-axis.

A third group of prismatic elements 25, 29 further inwards to the optical axis is inclined towards the optical axis and parallel to the vertical y-axis. A fourth group of prismatic elements 26, 28 further inwards to the optical axis is inclined towards the optical axis and with respect to the vertical y-axis. A central prismatic element 27 is parallel to the vertical y-axis and to the horizontal x-axis.

Fig. 5 shows a schematic view of two adjacent prismatic elements, one of which is inclined with respect to the vertical y-axis.

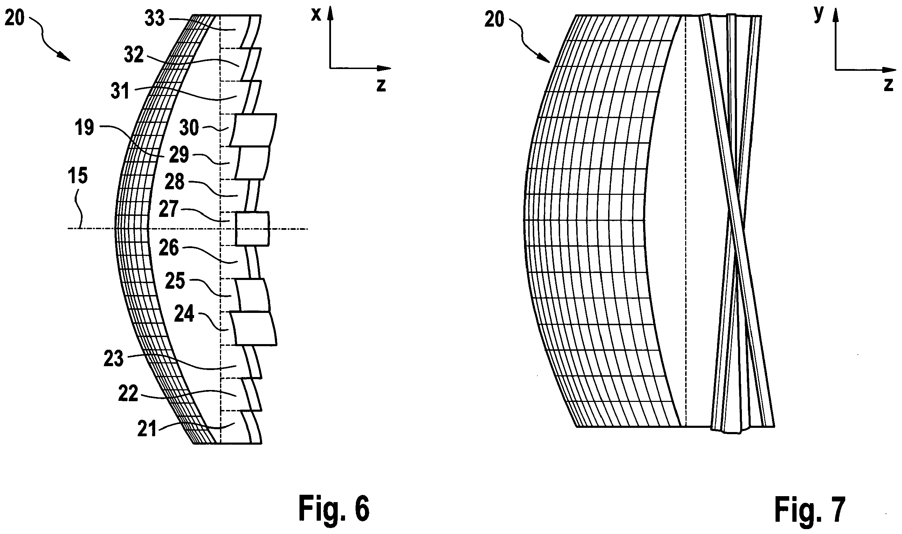

Fig. 6 shows a top view of the lens 20. In particular, Fig. 6 shows that the front surfaces of the prismatic elements 21 - 33 and of the corresponding microlenses are inclined towards the optical axis 15.

Fig. 7 shows a side view of the lens 20 and illustrates the inclinations of the front surfaces of the prismatic elements 21 - 33 in the y-z plane.

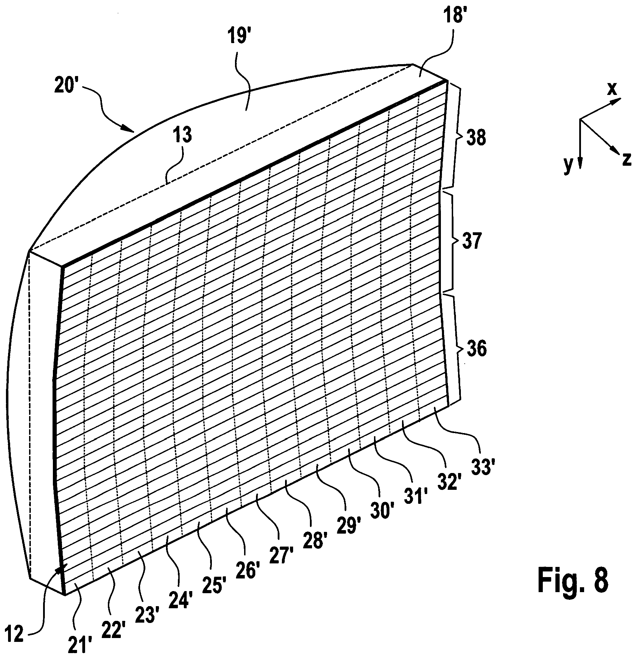

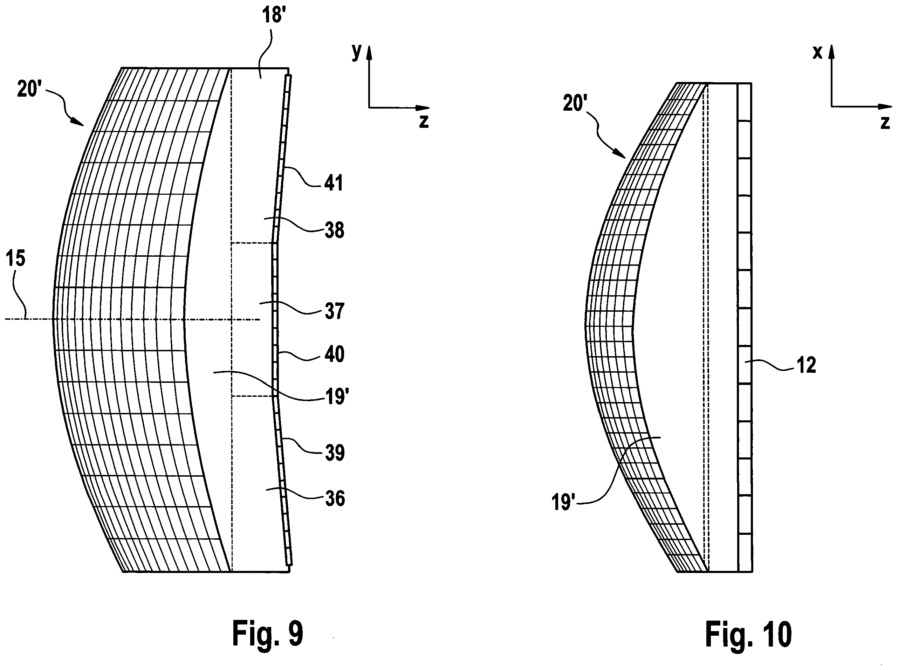

Fig. 8 shows a further embodiment of a transmitter lens 20'. The front portion 18' of the transmitter lens 20' comprises
three horizontal partitions or prismatic elements 36, 37, 38, which can be best seen in fig 9. But the partitions are horizontal. Sections 38,37,36 have an array of convex structures or microlenses on top of them. In the embodiment of Fig. 8, the array comprises thirteen rows 21' - 33' of microlenses or convex structures.

The prismatic elements 36, 37, 38 are arranged parallel to the horizontal axis. The topmost prismatic element 38 is inclined towards the optical axis in the y-z plane, the middle prismatic element 37 is parallel to the plane surface 30, and the bottom prismatic element 36 is inclined towards the optical axis in the y-z plane.

The microlenses 12 are arranged in a rectangular array on top of the prismatic elements 36-38. In the specific example of Fig. 8, the upper prismatic element 38 and the bottom portion 36 of a prismatic element each comprise 13 x 10 microlenses and the middle prismatic element 37 comprises 13 x 9 micro lenses.

Fig. 9 shows a side view of the lens 20' of Fig. 8. Fig. 8 illustrates a shape of the prismatic elements 36 - 38. A front surface 39 of the bottom prismatic element 36 is inclined with respect to the vertical y-axis and is inclined towards an optical axis 15 of the lens 20', a front surface 40 of the center prismatic element 37 is perpendicular to the optical axis 15, and a front surface 41 of the top prismatic element 38 is inclined with respect to the vertical y-axis and towards the optical axis 15.

In the embodiment of Figs. 8 - 10, the lens 20' with the prismatic elements 36 - 38 is symmetric with respect to a horizontal centre plane, which is perpendicular to the plane surface 13 and which divides the lens 20' into a lower and an upper half. The front surfaces 39, 40 and 41 of the prismatic elements are plane surfaces, such that an array of microlenses can be attached conveniently to the prismatic elements 36 - 38. In further embodiments, the front surfaces 39, 40, 41 may also have a curved shape.

Fig. 10 shows a top view of the lidar lens 20' of Fig. 8. In Fig. 8, thirteen microlenses 12 are shown, which are provided on respective front surfaces of the three prismatic elements 36-38.

The lidar lens 20' and the lidar lenses according to the other embodiments, such as the lenses 20, 20'' and 20''', can be manufactured in one piece by using a molding process.

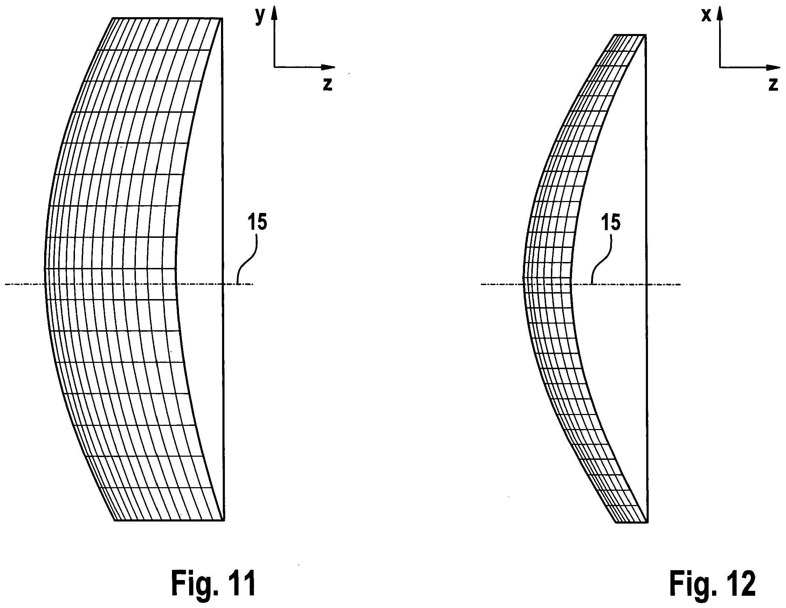

Figs. 11 and 12 show a side view and a top view of the back portion 19, 19' of the lens 20 or of the lens 20', wherein the convex curved surface of the lens is indicated by a grid. Figs. 11 are not shown to scale with respect to each other.

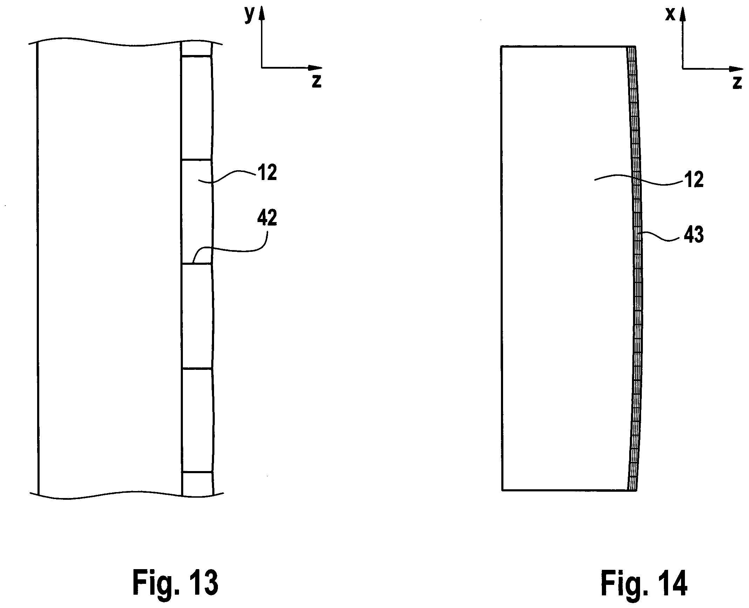

Fig. 13 shows a vertical cross section of the array of microlenses 12 in the middle section of lens 20'. The microlenses can have a rectangular cross section in the x-y plane such that they can be placed next to each other, as shown in Fig. 13, in which lateral boundaries 42 of the microlenses 12 abut to each other.

Fig. 14 shows a side view of a microlens 12, in which a grid indicates the curvature of a front surface 43 of the microlens 12, which is shown from the side. The microlens 12 has a concave shape in both the x and y direction. A curvature of the concave shape in x direction is different from a curvature of the concave shape in y direction.

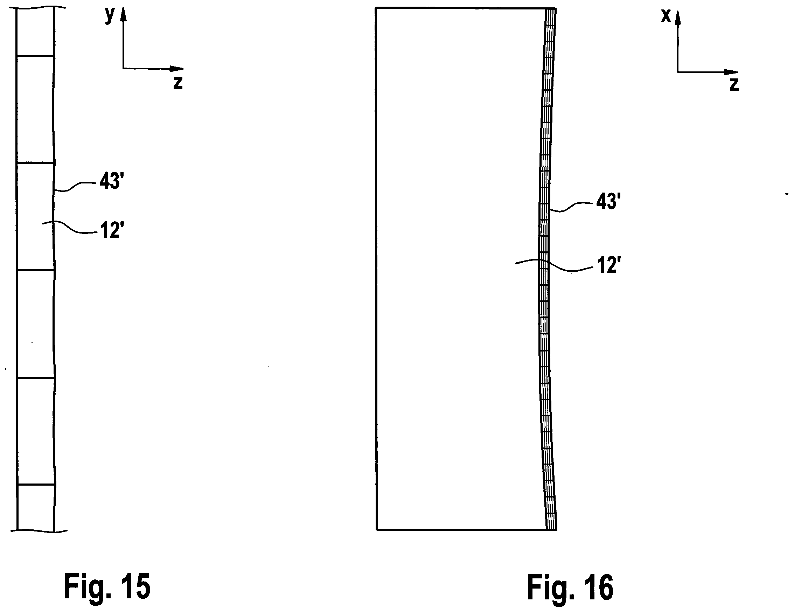

Fig. 15 shows a side view of a microlens array according to another embodiment in which the front surfaces 43' are concave shape. Similar to the convex shape, the concave shape provides a widening of the light bundle that exits from the microlens. Different form the convex shape the widening occurs at the front surface of the microlens 12', and not behind a focal point.

Similar to the convex microlens 12, a focal length of the concave microlens 12' in x direction may be made different from a focal length in a y dirction which is orthogonal to the x-direction. Herein, the focal length refers to the distance of the virtual focal point.

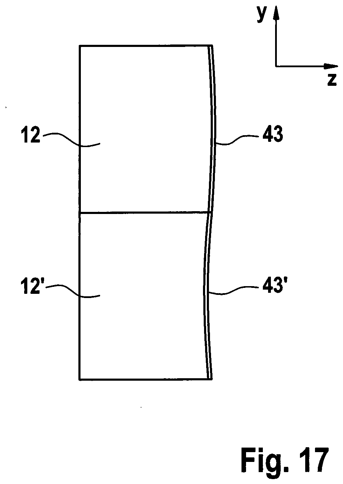

Fig. 17 shows a vertical cross section through an array of alternating concave and convex microlenses 12, 12'. The surfaces 43, 43' of two adjacent concave and convex microlenses 12, 12' are shaped such that there is a smooth transition between the curvature of the convex microlens 12 and the concave microlens 12' in the region where the microlenses 12, 12' abut to each other.

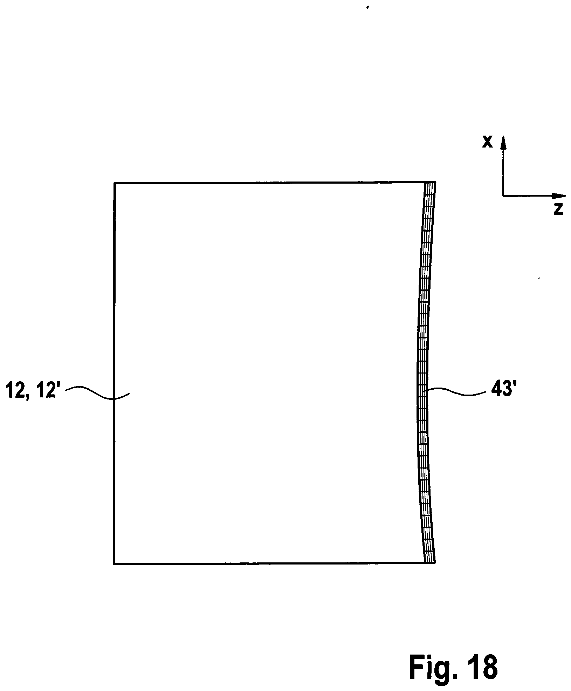

Fig. 18 shows a top view of a concave microlens 12' of the array of Fig. 17. Fig. 18 also shows a top view of a convex microlens 12 of the array of Fig. 17.

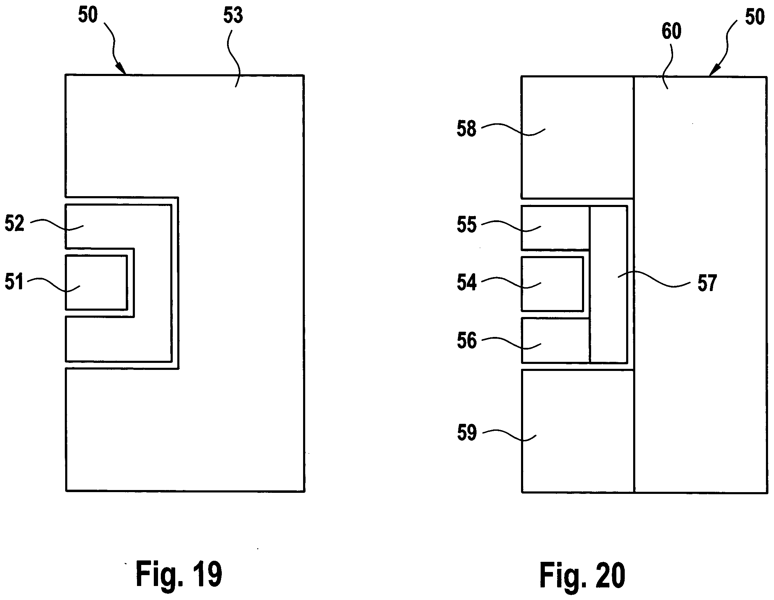

Figs. 19 and 20 show a partitioning of a field of view/illuminated scene, which is composed of three subdomains that correspond to three channels, into rectangular areas. The subdomains are also referred to as "fields of view".

A partitioning into rectangular areas is a first step in a design process of a transmitter lens according to the current specification. In further steps, the orientations and sizes of the prismatic elements as well as the sizes and shapes of the microlenses are adjusted to realize a transmitter lens having a pre-determined field of view with a pre-determined power distribution of the subdomains.

The field of view 50 comprises a first subdomain 51 or top domain 51, a second subdomain 52 or middle domain 52, and third subdomain 53 or bottom domain 53. The subdomains 51, 52, 53 are partitioned into rectangular areas 54 - 60. Subdomain 52 is partitioned into rectangular areas 55, 56, 57 and subdomain 53 is partitioned into rectangular areas 58, 59, 60.

The rectangular areas can be characterized by vertical and horizontal solid angles as viewed from the transmitter lens. For example, the dimensions can be chosen such that the rectangular area 54 has dimensions of 2.8° x 3.6°, the rectangular areas 55 and 56 each have dimensions of 2.7° x 3.6°, the rectangular areas 58 and 59 each have dimensions of 6.9° x 6.2°, the rectangular area 57 has dimensions of 8.2° x 2.6°, the rectangular area 60 has dimensions of 22° x 7.8°, and the subdomains 51 and 52 and the subdomains 52 and 53 are each separated by a gap of width 0.4°.

By way of example, a light power that is radiated into the subdomains 51, 52 and 53 can be 22 Watt, 15 Watt and 33 Watt, respectively. Thus, a power distribution between the subdomains 51, 52 and 53 is 22:15:33.

The rectangular areas, or partitions, have different vertical extensions, which are also referred to as multiple vertical fields of view. Furthermore, the bottom rectangle has a large horizontal extent. By using a lens design according to the present specification a required field of view, such as the field of view shown in Fig. 19, can be provided in a convenient way. The lens design provides various degrees of freedom, which include providing prismatic elements of varying inclinations, providing an array of microlenses, which can be concave or convex, on top of the prismatic elements and varying the focal length of the microlenses independently for the horizontal and vertical direction according to a required field of view.

According to the current specification, the prismatic elements and the microlens array are designed to direct portions of the light from the laser light source into the rectangular subareas 54 - 60.

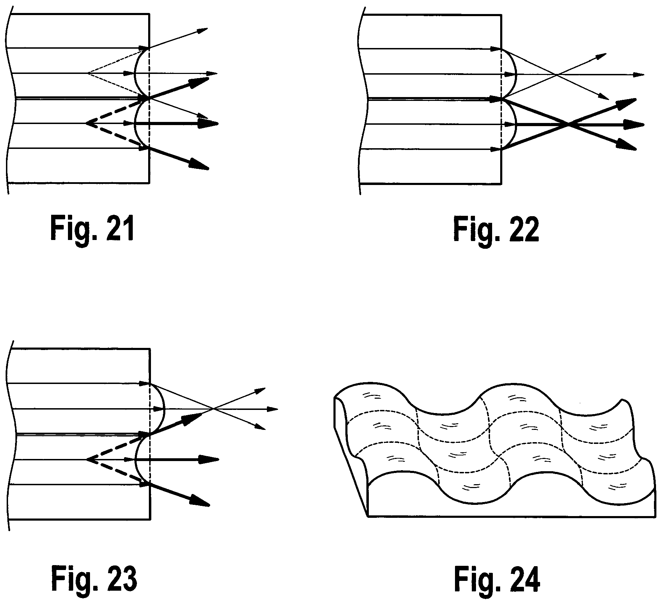

Figs. 21, 22 and 23 illustrate ray paths of different types of microlens arrays by showing the ray paths of a central light ray and two outer light rays. Figs. 21 - 23 may relate to a cross section in the x-z plane or to a cross section in the y-z plane. In the first case Figs. 21 - 23 illustrate the realization of a horizontal field of view, according to which the periodic structures are curved in the horizontal direction to realize a horizontal field of view. In the second case, Figs. 21 - 23 illustrate the realization of a vertical field of view, according to which the periodic structures are curved in the vertical direction to realize a vertical field of view.

In particular, a vertical field of view of a transmitter lens can be achieved by periodic structures on top of the prismatic elements, facets or the prisms, such as the periodic structures shown in Figs. 21 to 23. By realizing the vertical field of view using periodic structures on the front surface of the lens, multiple vertical fields of view can be achieved. Each of the prisms or the facets can have a different kind of periodic structure.

Similarly, multiple horizontal fields of view can be achieved using periodic structures on top of the prisms. The periodic structures in both the horizontal and vertical directions can also be combined, as shown in Fig. 24.

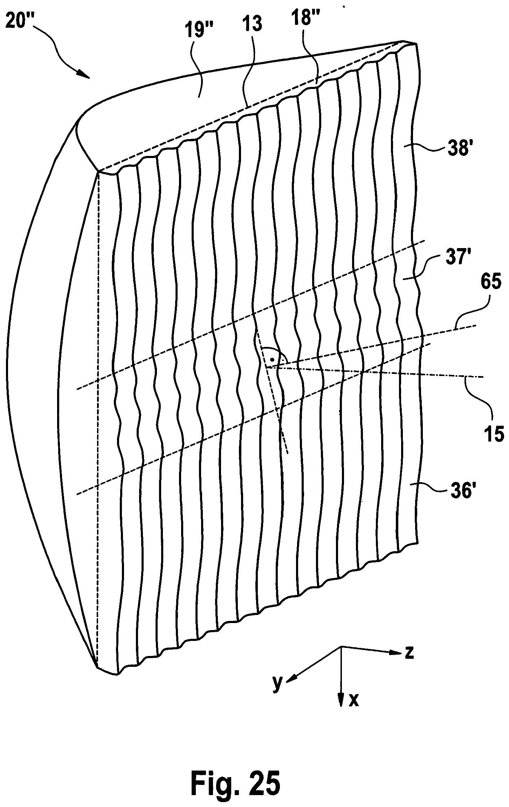

Fig. 24 illustrates a surface of an array of alternating concave and convex light rays. As shown in Fig. 24, the combination of alternate structures in horizontal and vertical direction creates a kind of waveform, which is continuous and convenient to manufacture. The waveform consists of saddle shape, concave sphere and convex sphere shapes. The shape shown in Fig. 24 is used to build the transmitter lens shown in Fig. 25. This waveform is superimposed on the front surface of the lens or the prisms.

In general, the curvature of the periodic structures, which form the microlens array, can be any kind of lens shape, such as a circle, parabola, polynomial, etc. A polynomial shape is particularly useful because of its continuity on the edge between one periodic structure to the next one. By controlling the focal length of the periodic structures, many different sizes of fields of view can be realized.

The pure-concave periodic structure, as shown in Fig. 21, forms a virtual light source inside the lens body and hence diverges the light from that point onwards. On the other hand, the pure-convex periodic structure, as shown in Fig. 22, focuses the light in front of the lens and the light starts diverging from the focus point. The alternate periodic structure, as shown in Fig. 23, is a mix of the two, i.e. an alternate convex and concave structure. The alternate periodic structure can provide manufacturing advantages and it can be designed such that there are little or no edges between the periodic structures.

A partitioning of the transmitter lens into prisms is not limited to a vertical partitioning, as in the transmitter lens of Fig. 4. The transmitter lens can also be portioned in the horizontal direction as shown in Figures 25 - 27 and Figure 8. In other words, the facets or the prisms can be arranged vertically as well as horizontally.

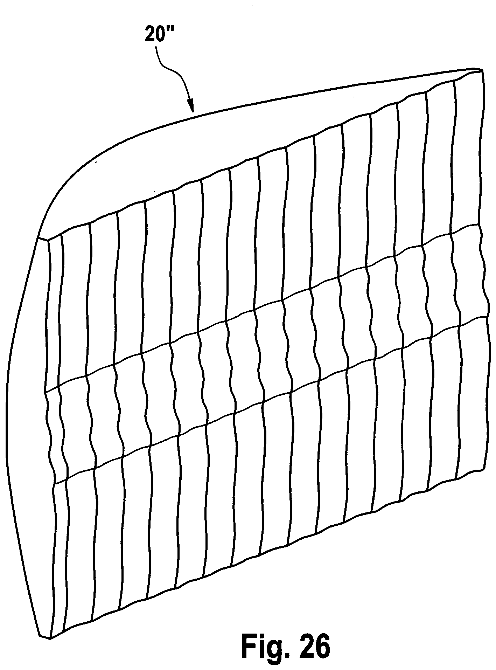

Figs. 25 and 26 shows a further design of a transmitter lens 20'' according to the present specification. Fig. 25 shows a schematic view and Fig. 26 shows a more detailed view of the lens 20'' of Fig. 25.

Similar to the transmitter lens 20' of Fig. 8 the transmitter lens 20'' comprises three sections or portions 36', 37', 38'. Similar to Fig. 8, the sections 36', 37', 38' provide a horizontal subdivision along the horizontal x-axis. The sections 36', 37', 38' may be regarded as prismatic elements which comprise fifteen horizontal rows of microlenses each.

Different from the lens 20' and similar to the configuration shown in the preceding Figure 25, the microlens array of the transmitter lens 20'' is formed as an undulating surface of the prismatic elements 36', 37', 38' which forms alternating convex and concave microlenses. Thus, the microlenses of the transmitter lens 20'' are not provided as separate elements. Instead, they are formed out by the shape of the undulating surface.

In the embodiment of Fig. 25, an undulation of the front surface is constant along the horizontal x-direction. Furthermore, an undulation along the horizontal x-direction is more pronounced in the middle portion 37' than in the bottom portion 36' and the top portion 38'.

A surface normal 65 of the middle portion 37' is inclined with respect to an optical axis 15 of the back portion 19'' of the transmitter lens 20''. A surface normal of the bottom portion 36' and a surface normal of the top portion 38' are parallel to the optical axis 15. Herein, the surface normal is defined with respect to an average surface. The average surface is a plane surface, which can be defined as a surface in which the undulations are averaged out. Alternatively, an average surface can also be defined as a plane surface which connects the minima or as a surface that connects the maxima of the undulating surface of the respective portion 36', 37' or 38'.

A boundary between prismatic elements can be defined as a border between a first region, which has a first orientation of its average surface, and a second region, which has a second orientation of its average surface, wherein the second orientation is different from the first orientation. According to this definition, the transmitter lens 20'' comprises three prismatic elements.

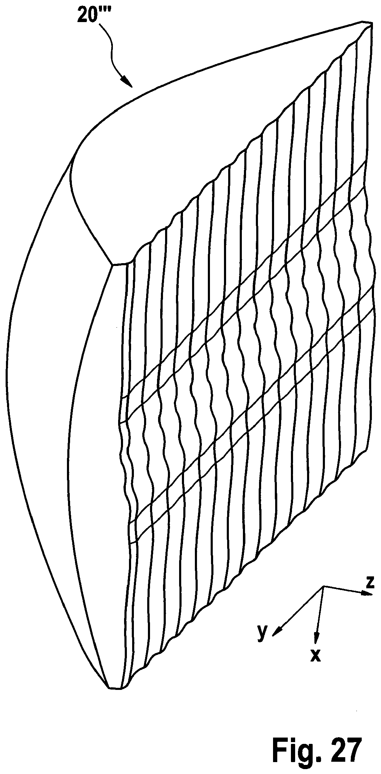

Fig. 27 shows a further embodiment of a transmitter lens 20''' having five horizontal prismatic elements or prismatic structures.

According to the present specification, a horizontal field of view can be realized by the curvature the periodic structures in the horizontal direction, and the width of the prisms is only used for the power distribution. Hence, the realization of the horizontal field of view is decoupled from the realization of the power distribution between the channels. This decoupling of the horizontal field of view and the power distribution significantly reduces the number of prims or facets and also increases the accuracy of the power distribution.

## Claims

1. A transmitter lens for a lidar sensor system, the transmitter lens (11, 11', 20) comprising a back portion (19, 19'), the back portion (19, 19') having a convex shape in a first direction and in a second direction, the first direction being perpendicular to the second direction,
the transmitter lens (11, 11', 20) comprising a front portion (18, 18'), the front portion (18, 18') comprising one or more prismatic elements (21-33, 21'-33')for directing light rays (8), , the prismatic elements (21-33, 21'-33') comprising respective front surfaces (39, 40, 41),
wherein an array of microlenses (12, 12') is provided at the front surfaces (39, 40, 41) of the prismatic elements (21-33, 21'-33') for shaping bundles of emitted light rays (9),
**characterized in that** the prismatic elements (21-33, 21'-33') being aligned in parallel to the first direction with respect to a lateral boundary of the prismatic elements (21-33, 21'-33'), wherein the lateral boundary of the prismatic elements (21-33, 21'-33') which separates the prismatic elements (21-33, 21'-33') from each other is aligned in parallel to the first direction.

2. The transmitter lens according to claim 1, wherein a focal length of the microlenses (12, 12') in the first direction is different from or equal to a focal length in the second direction.

3. The transmitter lens according to claim 1 or claim 2, wherein the front surfaces (39, 40, 41) of the prismatic elements (21-33, 21'-33') could be inclined in any direction with respect to an optical axis of the back portion (19, 19').

4. The transmitter lens according to one of the claims 1 to 3, wherein the array of microlenses (12, 12') comprises convex microlenses, saddle shape microlenses and concave microlenses.

5. The transmitter lens according to one of the claims 1 to 4, wherein the array of microlenses (12, 12') is selected from an array of rectangular microlenses (12, 12'), an array of polygonal microlenses (12, 12') and an array of circular microlenses (12, 12').

6. The transmitter lens according to one of the claims 1 to 5, wherein front surfaces (39, 40, 41) of the prismatic elements (21-33, 21'-33') are overlaid with an array of only concave microlenses (12, 12'), an array of only convex microlenses (12, 12'), or an array of alternate convex, saddle and concave microlenses (12, 12') both with respect to the first direction to and second direction.

7. The transmitter lens according to one of the claims 1 to 6, wherein one or more prismatic elements (21-33, 21'-33') comprise the front part of the transmitter lens (11, 11', 20) with a front surface (39, 40, 41) that is parallel or inclined towards or away the optical axis with respect to either the first direction or the second direction; or both.

8. The transmitter lens according to claim 7, wherein the prismatic elements (21-33, 21'-33') occupy either horizontal or vertical partitions (36, 37, 38) of the front part of transmitter lens (11, 11', 20).

9. The transmitter lens according to one of the preceding claims, wherein at least two of the prismatic elements (21-33, 21'-33') comprise a front surface (39, 40, 41) that is inclined towards the optical axis with respect to the second direction.

10. The transmitter lens according to one of the preceding claims, the transmitter lens (11, 11', 20) comprising at least three prismatic elements (21-33, 21'-33').

11. The transmitter lens according to one of the preceding claims, wherein at least two outer prismatic elements (21-33, 21'-33') are inclined towards the optical axis with respect to the second direction and parallel to the first direction, and at least two inner prismatic elements (21-33, 21'-33') are inclined towards the optical axis with respect to the first direction and parallel with respect to the second direction.

12. Transmitter unit of a lidar sensor system, the transmitter unit comprising a laser light source (10) and the transmitter lens (11, 11', 20) according to one of the claims 1 to 11, the laser light source (10) being provided in a focal plane of the back portion (19, 19') of the transmitter lens (11, 11', 20).

13. A lidar sensor system, the lidar sensor system comprising the transmitter unit according to claim 12 and a receiver unit with a receiver lens and a light detector, wherein the receiver lens is arranged such that reflected light from an object that is irradiated from the transmitter lens (11, 11', 20) is captured by the receiver lens.

14. A car with a lidar sensor system according to claim 13, the lidar sensor system being mounted to the car such that the transmitter lens (11, 11', 20) is facing towards the surroundings of the car.

15. The car according to claim 14, wherein the lidar sensor system is mounted to a front portion (18, 18') of the car.

## Patentansprüche

1. Sendelinse für ein Lidarsensorsystem, wobei die Sendelinse (11, 11', 20) einen Rückabschnitt (19, 19') umfasst, der Rückabschnitt (19, 19') eine konvexe Form in einer ersten Richtung und in einer zweiten Richtung aufweist, die erste Richtung senkrecht zu der zweiten Richtung verläuft,
die Sendelinse (11, 11', 20) einen Vorderabschnitt (18, 18') umfasst, der Vorderabschnitt (18, 18') ein oder mehr prismatische Elemente (21-33, 21'-33') zum Lenken von Lichtstrahlen (8) umfasst, die prismatischen Elemente (21-33, 21'-33') jeweilige Vorderflächen (39, 40, 41) umfassen,
wobei ein Array von Mikrolinsen (12, 12') an den Vorderflächen (39, 40, 41) der prismatischen Elemente (21-33, 21'-33') zum Formen von Bündeln von emittierten Lichtstrahlen (9) vorgesehen ist,
**dadurch gekennzeichnet, dass** die prismatischen Elemente (21-33, 21'-33') parallel auf die erste Richtung in Bezug auf eine laterale Grenze der prismatischen Elemente (21-33, 21'-33') ausgerichtet sind, wobei die laterale Grenze der prismatischen Elemente (21-33, 21'-33'), die die prismatischen Elemente (21-33, 21'-33') voneinander trennt, parallel auf die erste Richtung ausgerichtet ist.

2. Sendelinse nach Anspruch 1, wobei eine Brennweite der Mikrolinsen (12, 12') in der ersten Richtung sich von einer Brennweite in der zweiten Richtung unterscheidet oder gleich jener ist.

3. Sendelinse nach Anspruch 1 oder Anspruch 2, wobei die Vorderflächen (39, 40, 41) der prismatischen Elemente (21-33, 21'-33') in Bezug auf eine optische Achse des Rückabschnitts (19, 19') in jeder Richtung geneigt sein könnten.

4. Sendelinse nach einem der Ansprüche 1 bis 3, wobei das Array von Mikrolinsen (12, 12') konvexe Mikrolinsen, sattelförmige Mikrolinsen und konkave Mikrolinsen umfasst.

5. Sendelinse nach einem der Ansprüche 1 bis 4, wobei das Array von Mikrolinsen (12, 12') aus einem Array von rechteckigen Mikrolinsen (12, 12'), einem Array von polygonalen Mikrolinsen (12, 12') und einem Array von kreisförmigen Mikrolinsen (12, 12') ausgewählt ist.

6. Sendelinse nach einem der Ansprüche 1 bis 5, wobei Vorderflächen (39, 40, 41) der prismatischen Elemente (21-33, 21'-33') von einem Array von nur konkaven Mikrolinsen (12, 12'), einem Array von nur konvexen Mikrolinsen (12, 12') oder einem Array von alternierenden konvexen, sattelförmigen und konkaven Mikrolinsen (12, 12') sowohl in Bezug auf die erste Richtung als auch in Bezug auf die zweite Richtung überdeckt sind.

7. Sendelinse nach einem der Ansprüche 1 bis 6, wobei ein oder mehr prismatische Elemente (21-33, 21'-33') den Vorderteil der Sendelinse (11, 11', 20) mit einer Vorderfläche (39, 40, 41) umfassen, die parallel zu der optischen Achse verläuft oder zu ihr hin oder von ihr weg geneigt ist in Bezug auf entweder die erste Richtung oder die zweite Richtung; oder beides.

8. Sendelinse nach Anspruch 7, wobei die prismatischen Elemente (21-33, 21'-33') entweder horizontale oder vertikale Teilbereiche (36, 37, 38) des Vorderteils der Sendelinse (11, 11', 20) einnehmen.

9. Sendelinse nach einem der vorangehenden Ansprüche, wobei mindestens zwei der prismatischen Elemente (21-33, 21'-33') eine Vorderfläche (39, 40, 41) umfassen, die in Bezug auf die zweite Richtung zu der optischen Achse hin geneigt ist.

10. Sendelinse nach einem der vorangehenden Ansprüche, wobei die Sendelinse (11, 11', 20) mindestens drei prismatische Elemente (21-33, 21'-33') umfasst.

11. Sendelinse nach einem der vorangehenden Ansprüche, wobei mindestens zwei äußere prismatische Elemente (21-33, 21'-33') in Bezug auf die zweite Richtung zu der optischen Achse hin geneigt sind und parallel zu der ersten Richtung verlaufen und mindestens zwei innere prismatische Elemente (21-33, 21'-33') in Bezug auf die erste Richtung zu der optischen Achse hin geneigt sind und parallel in Bezug auf die zweite Richtung verlaufen.

12. Sendeeinheit eines Lidarsensorsystems, wobei die Sendeeinheit eine Laserlichtquelle (10) und die Sendelinse (11, 11', 20) nach einem der Ansprüche 1 bis 11 umfasst, wobei die Laserlichtquelle (10) in einer Brennebene des Rückabschnitts (19, 19') der Sendelinse (11, 11', 20) vorgesehen ist.

13. Lidarsensorsystem, wobei das Lidarsensorsystem die Sendeeinheit nach Anspruch 12 und eine Empfangseinheit mit einer Empfangslinse und einem Fotodetektor umfasst, wobei die Empfangslinse derart angeordnet ist, dass reflektiertes Licht von einem Objekt, das von der Sendelinse (11, 11', 20) ausgestrahlt wird, durch die Empfangslinse eingefangen wird.

14. Auto mit einem Lidarsensorsystem nach Anspruch 13, wobei das Lidarsensorsystem derart an dem Auto montiert ist, dass die Sendelinse (11, 11', 20) der Umgebung des Autos zugewandt ist.

15. Auto nach Anspruch 14, wobei das Lidarsensorsystem an einem Vorderabschnitt (18, 18') des Autos montiert ist.

## Revendications

1. Lentille émettrice pour un système de capteur lidar, la lentille émettrice (11, 11', 20) comprenant une portion arrière (19, 19'), la portion arrière (19, 19') ayant une forme convexe dans une première direction et dans une deuxième direction, la première direction étant perpendiculaire à la deuxième direction,
la lentille émettrice (11, 11', 20) comprenant une portion frontale (18, 18'), la portion frontale (18, 18') comprenant un ou plusieurs éléments prismatiques (21-33, 21'-33') pour diriger des rayons lumineux (8), les éléments prismatiques (21-33, 21'-33') comprenant des surfaces frontales respectives (39, 40, 41),
un ensemble de microlentilles (12, 12') étant fourni sur les surfaces frontales (39, 40, 41) des éléments prismatiques (21-33, 21'-33') pour donner forme à des faisceaux de rayons lumineux (9) émis,
**caractérisée en ce que** les éléments prismatiques (21-33, 21'-33') étant alignés parallèlement à la première direction par rapport à une limite latérale des éléments prismatiques (21-33, 21'-33'), la limite latérale des éléments prismatiques (21-3, 21'-33') séparant les éléments prismatiques (21-33, 21'-33') les uns des autres étant alignée parallèlement à la première direction.

2. Lentille émettrice selon la revendication 1, une distance focale des microlentilles (12, 12') dans la première direction étant différente de, ou égale à, une distance focale dans la deuxième direction.

3. Lentille émettrice selon la revendication 1 ou la revendication 2,
les surfaces frontales (39, 40, 41) des éléments prismatiques (21-33, 21'-33') pouvant être inclinées dans une quelconque direction relativement à un axe optique de la portion arrière (19, 19').

4. Lentille émettrice selon l'une des revendications 1 à 3, l'ensemble de microlentilles (12, 12') comprenant des microlentilles convexes, des microlentilles en forme de selle et des microlentilles concaves.

5. Lentille émettrice selon l'une des revendications 1 à 4, l'ensemble de microlentilles (12, 12') étant sélectionné parmi le groupe se composant d'un ensemble de microlentilles rectangulaires (12, 12'), d'un ensemble de microlentilles polygonales (12, 12') et d'un ensemble de microlentilles circulaires (12, 12').

6. Lentille émettrice selon l'une des revendications 1 à 5, les surfaces frontales (39, 40, 41) des éléments prismatiques (21-33, 21'-33') étant recouvertes par un ensemble de microlentilles uniquement concaves (12, 12'), un ensemble de microlentilles uniquement convexes (12, 12'), ou un ensemble de microlentilles convexes, en forme de selle et concaves (12, 12') alternées, par rapport à la fois à la première direction et à la deuxième direction.

7. Lentille émettrice selon l'une des revendications 1 à 6, un ou plusieurs éléments prismatiques (21-33, 21'-33') comprenant la partie frontale de la lentille émettrice (11, 11', 20) avec une surface frontale (39, 40, 41) qui est parallèle à, ou inclinée vers, ou dans la direction opposée à, l'axe optique par rapport à chacune des première ou deuxième directions, ou aux deux.

8. Lentille émettrice selon la revendication 7, les éléments prismatiques (21-33, 21'-33') occupant des partitions soit horizontales soit verticales (36, 37, 38) de la partie frontale de la lentille émettrice (11, 11', 20).

9. Lentille émettrice selon l'une des revendications précédentes, au moins deux des éléments prismatiques (21-33, 21'-33') comprenant une surface frontale (39, 40, 41) qui est inclinée vers l'axe optique par rapport à la deuxième direction.

10. Lentille émettrice selon l'une des revendications précédentes, la lentille émettrice (11, 11', 20) comprenant au moins trois éléments prismatiques (21-33, 21'-33').

11. Lentille émettrice selon l'une des revendications précédentes, au moins deux éléments prismatiques extérieurs (21-33, 21'-33') étant inclinés vers l'axe optique par rapport à la deuxième direction et parallèlement à la première direction, et au moins deux éléments prismatiques intérieurs (21-33, 21'-33') étant inclinés vers l'axe optique par rapport à la première direction et parallèlement à la deuxième direction.

12. Unité de transmission d'un système de capteur lidar, l'unité de transmission comprenant une source de lumière laser (10) et la lentille émettrice (11, 11', 20) selon l'une des revendications 1 à 11, la source de lumière laser (10) étant fournie dans un plan focal de la portion arrière (19, 19') de la lentille émettrice (11, 11', 20).

13. Système de capteur lidar, le système de capteur lidar comprenant l'unité de transmission selon la revendication 12 et une unité de réception avec une lentille réceptrice et un détecteur de lumière, la lentille réceptrice étant disposée de sorte que la lumière réfléchie par un objet qui est rayonnée par la lentille émettrice (11, 11', 20) est captée par la lentille réceptrice.

14. Voiture avec un système de capteur lidar selon la revendication 13, le système de capteur lidar étant monté sur la voiture de telle sorte que la lentille émettrice (11, 11', 20) est tournée vers les environs de la voiture.

15. Voiture selon la revendication 14, le système de capteur lidar étant monté sur une portion frontale (18, 18') de la voiture.
